# EUROPEAN PATENT SPECIFICATION

(11) **EP 2 340 368 B1**
(45) Date of publication and mention of the grant of the patent: **05.06.2013**
(21) Application number: 08806996.8
(22) Date of filing: 05.09.2008
(51) Int. Cl.: F03B 7/00

(54) **AN ENERGY GENERATING SYSTEM USING A PLURALITY OF WATERWHEELS**
MEHRERE WASSERRÄDER VERWENDENDES ENERGIEERZEUGUNGSSYSTEM
SYSTEME GENERATEUR D'ENERGIE UTILISANT UNE PLURALITE DE ROUES HYDRAULIQUES

(43) Date of publication of application: 06.07.2011
(73) Proprietor: Meadon, Sean Brian, 1683 Midrand (ZA); Meadon, Anne-Marie, 1683 Midrand (ZA)
(72) Inventor: Meadon, Sean Brian, 1683 Midrand (ZA); Meadon, Anne-Marie, 1683 Midrand (ZA)
(74) Representative: Thomson, Neil David
(86) International application number: PCT/IB2008/002303
(87) International publication number: WO 2009/031016

(56) References cited:
- EP-A- 1 522 723
- EP-A- 1 795 747
- BE-A- 382 236
- BG-Y1- 559
- CH-A5- 685 354
- CN-Y- 2 232 090
- GB-A- 265 094
- GB-A- 2 294 093
- US-A- 1 476 457

## Description

### FIELD OF THE INVENTION

This invention relates to an energy conversion system using a plurality of waterwheels, and in particular, to the improvement of the generation of hydroelectric power by means of an integrated configuration of a plurality of waterwheels. This invention also refers to improvements in the general shape and construction of individual waterwheels with a view to increasing their efficiency in their generation of electrical energy from flowing water.

### BACKGROUND OF THE INVENTION

A waterwheel is a hydropower machine which extracts power from the flow of water. The most efficient earliest waterwheels were so-called overshot waterwheels, and these comprised water scoops or buckets for receiving and temporarily holding water flowing over the waterwheel from an elevated head of water, which in turn caused the waterwheel to turn. Other types included undershot and breast waterwheels, but they were far less efficient. Overshot waterwheels have the advantage of not only transferring some of the energy of flowing water directly into its rotation, but also transferring the force due to the weight of water into its rotation as well. These overshot waterwheels however, have a number of design flaws that resulted in vast volumes of water being wasted/spilled, and therefore making them relatively inefficient.

Waterwheels were gradually replaced by turbines as these proved to be more efficient and less costly in building. However, turbines generally need to be installed at the time that a dam wall is being constructed, and their efficiency is primarily a function of their positioning and design criteria. A penstock is typically used to connect the water flow from a head of water to the turbine, with, accordingly the performance of the turbine also being directly a function of the flow of water through the penstock and of the final head of water. Thus, structurally, a turbine-based hydropower system is a once-off design that is very specific to a particular dam's arrangement, which is limiting.

Therefore, in order to make optimal use of the advantages of energy transfer that a waterwheel has, and the advantage of being able to install it after a dam wall has already been completed, the efficiency of using waterwheels in power generation needs to be increased to compete with that of turbines.

It is also recognized that the energy created from a waterwheel is in fact an extension of a simple lever principle, where the weight of water in the wheel multiplied by the length of spoke on the waterwheel provides a rotational energy in the axle of the waterwheel. This is countered by the loss of energy due to friction in various forms as the wheel rotates.

In terms of background art, US 1,476,457 discloses a water-power wheel and in particular to a means for controlling the discharge of water from a water wheel. The disclosed arrangement comprises a primary wheel and a secondary wheel, with a movable gate being provided to be operated by the secondary wheel to retain or discharge the water from a discharge side of the primary wheel. The waterwheels are housed within a flume, with water entering the flume through an inlet, flowing over the secondary wheel so as to rotatably drive the secondary wheel, then flowing over the primary wheel and then past a movable gate that is controlled by the rotating secondary wheel, and then finally out through an outlet.

EP 1522723 discloses a bucket for a waterwheel, the bucket comprising two curved half shells as bucket bottoms. On the concave side of a half shell, a deviating plate protruding into the bucket has a curved surface so that the direction of the water flowing into the bucket can be changed by 140-170°. Each half shell has in its edge region facing away from the water inlet opening a non-closable wall opening for air exchange facing the next bucket and a closable wall opening facing a bucket-free interior of the wheel.

CH 685354 provides a water-driven power generation plant. The generation plant has a waterwheel positioned across the bed of a stream or river, beneath a waterfall, so that it is rotated by the passage of the water across the top, and over the paddles, of the waterwheel. The waterwheel may comprise a number of individual waterwheels mounted on a common shaft, so as to extend across the full width of the river or stream bed, with the front edge of the waterfall projecting over a part of the waterwheel which is located in a recess beneath the front edge.

GB 2294093 discloses a water driven power system having a plurality of identical water driven power generators, each comprising a waterwheel, of which at least one is situated below the level of a large body of water held behind a dam and uses water under pressure from the body of water. The generator may drive pumps to raise water to drive the higher generators. A plurality of pipes may supply water to the generator from several different levels in the dam.

BE 382236 discloses a waterwheel arrangement comprising two identical waterwheels, one located directly above the other. The uppermost waterwheel receives water from a first reservoir, which causes it to rotate. A second reservoir is provided between the waterwheels, in which water that has flown past the uppermost reservoir accumulates. The lower waterwheel receives water from the second reservoir to rotatably drive it, with this lower waterwheel in turn being connected to a pulley that operates a pump body to pump water back up to the first reservoir.

BG 559 Y1 discloses a hydraulic engine having a number of identical waterwheels fitted to an inclined canal. The waterwheels are mechanically interconnected by means of bevel gears and associated shafts, and generally to an electric generator by means of another gear.

EP 1795747 discloses a hydraulic power generator comprising a plurality of waterwheels connected hydraulically in series, the waterwheels being arranged either vertically or at an incline. Each waterwheel drives its own individual electrical generator. At least two of the water wheels are driven in the same sense and are mechanically connected together.

### OBJECT OF THE INVENTION

It is therefore an object of the present invention to provide an energy generating system using a plurality of waterwheels, with the system aiming to improve the efficiency of the waterwheels, whilst also reducing the loss of energy due to friction.

### SUMMARY OF THE INVENTION

According to the invention there is provided an energy conversion system as claimed in claim 1,
comprising a primary waterwheel with a plurality of radial arms terminating in water scoops and at least one additional overshot waterwheel also comprising a plurality of radial arms terminating in water scoops, the additional waterwheel either discharging additional water from a penstock into the primary waterwheel, or accommodating water that spills out of the primary water wheel.

In an example embodiment, the primary waterwheel and the at least one additional waterwheel are vertically orientated.

In an example embodiment, the at least one additional waterwheel is smaller than the primary waterwheel.

In an example embodiment, the at least one additional waterwheel comprises a secondary waterwheel for receiving excess water from the head penstock. In an example embodiment, the secondary waterwheel is arranged to convey water back onto the water scoops of the primary waterwheel.

In an example embodiment, the at least one additional waterwheel comprises a tertiary waterwheel for receiving water that has spilled out of the water scoops of the primary waterwheel.

In an example embodiment, the width of the water scoops of the secondary waterwheel is less than the width of the water scoops of the primary waterwheel, which in turn is less than the width of the water scoops of the tertiary waterwheel.

In an example embodiment, the radial arms of each waterwheel are tapered so that the scoop situated at the very ends of the radial arms is widened so as to carry the maximum amount of water as close to the end of the radial arms as possible.

In an example embodiment, the water scoops are connected together at their ends by a weighted outer rim to create a flywheel effect.

In an example embodiment, the water scoops define breather holes along their edges.

In an example embodiment, the waterwheels are attached via their central axes to a gear mechanism which is then in turn connected to an alternator/generator system, each capable of transferring the rotative power of each waterwheel into electrical energy.

In an example embodiment, an upper pumping setup is located in the vicinity of the head penstock so as to provide a consistent flow of water through the head penstock from a dam to which the head penstock is fitted.

In an example embodiment, the waterwheels are fitted with braking means for controlling their rotation.

### BRIEF DESCRIPTION OF THE DRAWINGS

A preferred embodiment of the invention will be described, by way of example only, with reference to the drawings in which:
- **Figure 1**: is a sectional side elevation of an energy conversion system using a plurality of waterwheels, according to an example embodiment of the present invention;
- **Figure 2**: is a sectional plan view of the system shown in Figure 1;
- **Figure 3**: is a detailed view of a portion of a waterwheel spoke and scoop that may be used in the system shown in Figures 1 and 2, emphasizing features of the invention for rendering the waterwheel less prone to resistance from stationary air as it rotates; and
- **Figure 4**: is a sectional side elevation, similar to Figure 1, but here the expected flow of water is shown, as well as the necessary features to convert the waterwheel of the present invention to a potential pump storage device.

### DESCRIPTION OF PREFERRED EMBODIMENTS

This invention deals with the maximizing of power extracted from falling water, with the preferred embodiment below being described with reference to an overshot waterwheel. However, it is feasible that similar waterwheel configurations can use other types of waterwheels, and these are also included in the scope of this invention.

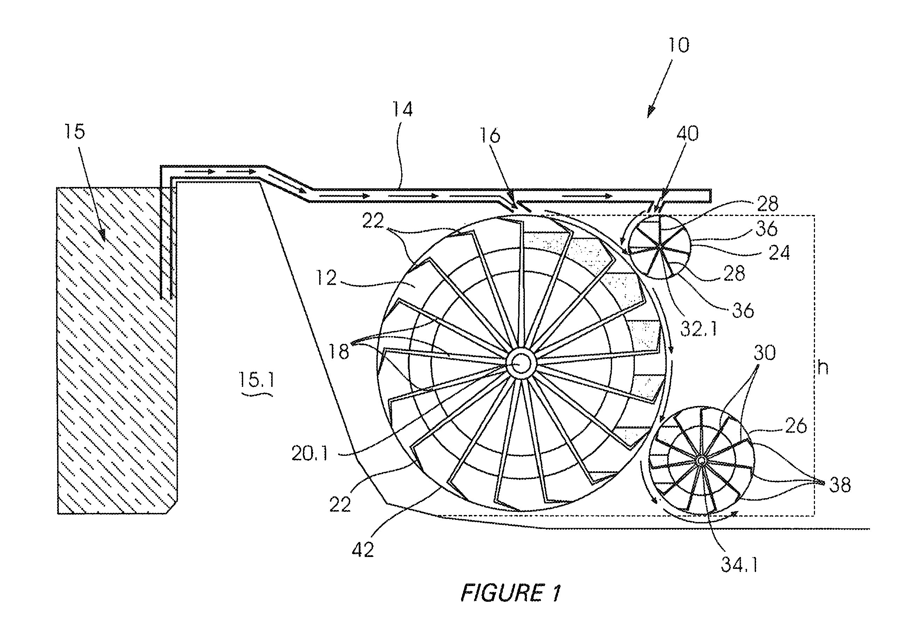

Referring first to Figures 1 to 3, an energy generating system 10 is shown comprising a primary waterwheel 12 for receiving water from a head penstock 14 having a first outlet 16 defined therein. The head penstock 14 is arranged to receive water from a dam 15 supported by a dam wall 15.1 in any one of a number of known ways. For example, although not shown, an upper pumping set may be provided to pump water into the penstock 14 for transport to the system 10.

The primary waterwheel 12 comprises a plurality of radial arms 18 rotatable about a primary axis 20, the radial arms 18 terminating in water scoops 22 for accommodating the water from the head penstock 14. The primary waterwheel 12 defines an effective head height, indicated by broken line marked 'h'.

The system 10 further comprises a pair of waterwheels 24, 26 located within the head height 'h' of the primary waterwheel 12. The additional waterwheels 24, 26 typically also comprises a plurality of radial arms 28, 30, respectively, rotatable about axes 32, 34, the radial arms 28, 30 terminating in water scoops 36, 38, respectively, for accommodating either excess water from the head penstock 14 or water that has spilled out of the water scoops 22 of the primary waterwheel 12, as will be described in more detail further on in the specification.

In an example embodiment, the primary waterwheel 12 and the additional waterwheels 24, 26 are vertically orientated.

As best shown in Figure 1, the additional waterwheels 24, 26 are smaller than the primary waterwheel 12.

In an example embodiment, one of the additional waterwheels 24, 26 comprises a secondary waterwheel 24 for receiving, and therefore being driven by, excess water leaving the head penstock 14 via a second outlet 40 defined therein. As best shown in Figure 1, the secondary waterwheel 24 may be arranged to convey water back onto the water scoops 22 of the primary waterwheel 12.

Another of the additional waterwheels 24, 26 defines a tertiary waterwheel 26 for receiving, and therefore being driven by, water that has spilled out of the water scoops 22 of the primary waterwheel 12. It can therefore be seen that the provision of the second and tertiary waterwheels 24, 26 aims to maximise the energy available from the falling water.

As indicated above, the two additional waterwheels 24, 26 are contained within the head height 'h' of the primary waterwheel 12, and thus their efficiency will be added to that of the main wheel. In this example, the secondary waterwheel 24 is able to place water between 50 - 70 degrees off the primary waterwheel's top dead centre, thus extending the period that the primary waterwheel 12 can be given water, yet at the same time the secondary waterwheel 24 is also generating additional torque on its own axis. Simultaneously, the tertiary waterwheel 26 is arranged to capture all the falling water from 90 - 135 degrees off the primary waterwheel's top dead centre.

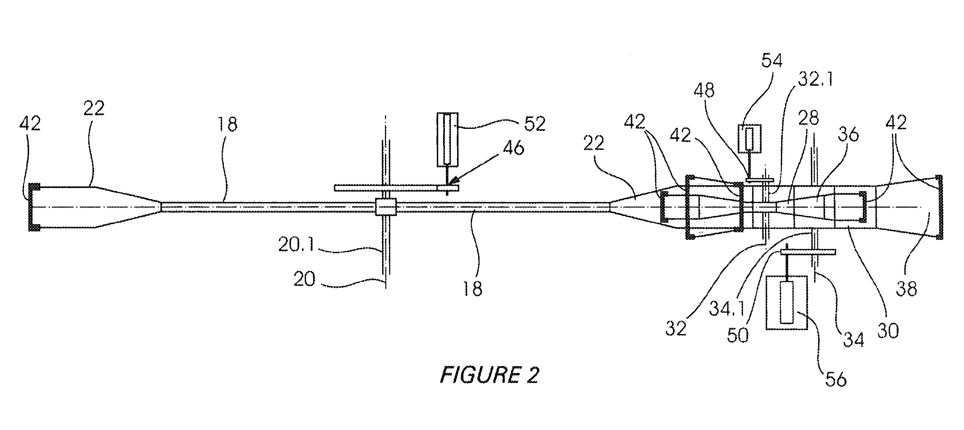

As best shown in Figure 2, the width of the water scoops 36 of the secondary waterwheel 24 is less than the width of the water scoops 22 of the primary waterwheel 12, which in turn is less than the width of the water scoops 38 of the tertiary waterwheel 26, so as to maximize water capture. Thus, a further feature of this invention is to vary the widths of the water scoops 22, 36, 38 to ensure that as much of the falling water as possible is utilized in the system 10, so as to maximize the transfer of energy. Thus, unlike with conventional waterwheel arrangements in which most of the water driving a waterwheel is discharged whilst the waterwheel rotates, in the present invention the excess falling water is used to provide the force required to turn yet another waterwheel 24, 26 that have been placed strategically in the path of the falling water.

It should be clear from the figures that the waterwheels 12, 24, 26 are arranged sufficiently close to each other and have design features (such as the width of each water scoop) so that as much of the falling water from a higher waterwheel is captured and utilized by the waterwheel below it.

As shown in the figures, the radial arms 18, 28, 30 are tapered so that the very ends of the radial arms 18, 28, 30 (i.e. the ends of the water scoops 22, 36, 38) carry the most water so that each waterwheel 12, 24, 26 defines a flywheel to assist in the rotation of the waterwheels 12, 24, 26. In particular, each of the radial arms 18, 28, 30 of the waterwheels 12, 24, 36 is tapered out towards a weighted outer rim 42 and tapered inwards towards axles 20.1, 32.1, 34.1 that define axes 20, 32, 34, so that the entire waterwheel 12, 24, 36 takes on some of the characteristics of a flywheel as it rotates. This tapered arrangement allows for the maximum amount of water to be contained as far from the central axes 20, 32, 34 as possible, thus maximising the leverage generated from the force of the falling water.

In an example embodiment, the water scoops 22, 36, 38 of each waterwheel are connected together at their ends by the weighted outer rim 42 to create a flywheel effect.

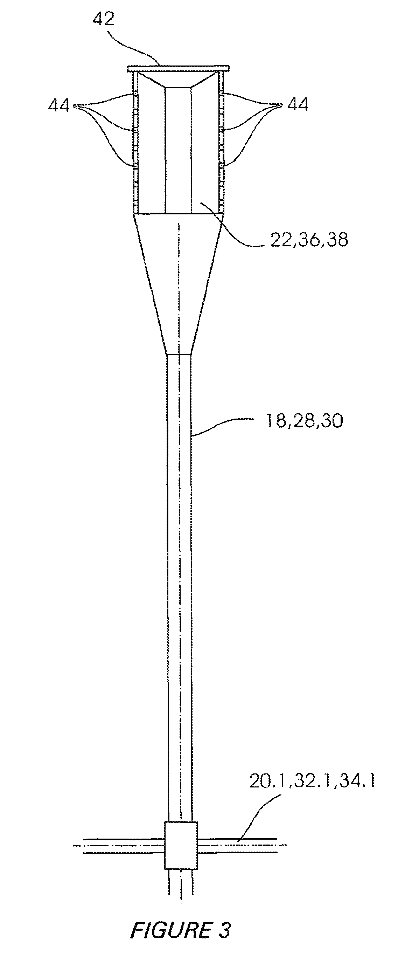

In an example embodiment, as best shown in Figure 3, the water scoops 22, 36, 38 define breather holes 44 along their edges so as to minimize the effects of air friction.

Thus, the water scoops 22, 36, 38 are designed to increase their efficiency in the transfer of energy and decrease resistance created by stationary air. In addition, the spokes or radial arms 18, 28, 30 are wedge-shaped, so as to further reduce drag due to frictional resistance from stationary air as the waterwheels 12, 24, 36 rotate.

In an example embodiment, the waterwheels 12, 24, 36 are attached via their central axles 20.1, 32.1, 34.1 to gear mechanisms 46, 48, 50, respectively, which in turn are connected to alternator/generator systems 52, 54, 56, each capable of transferring the rotative power of each waterwheel 12, 24, 36 into electrical energy.

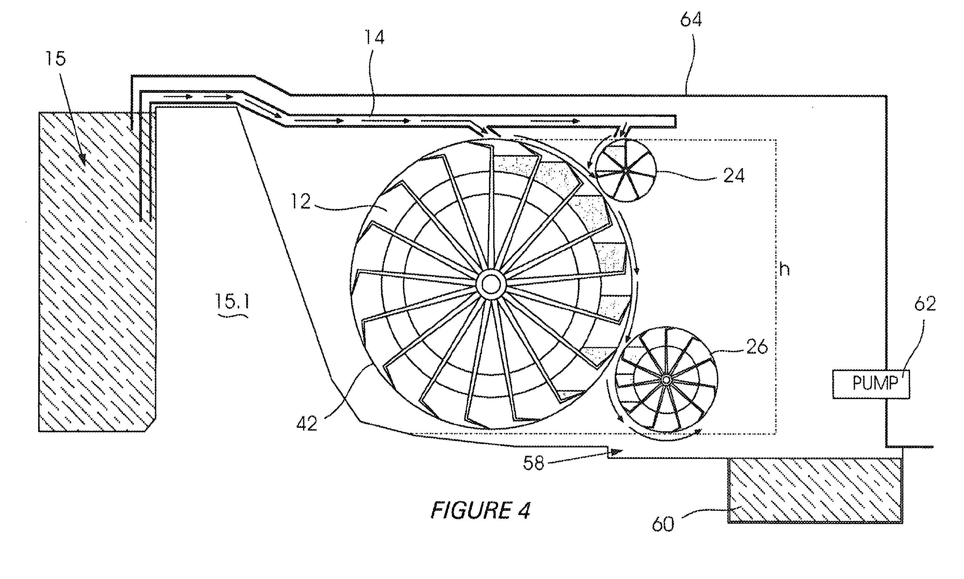

Turning to Figure 4, in use, typical flow of water is shown from a head penstock 14 and moves sequentially through the vertically arranged waterwheels 12, 24, 36, forcing each one to rotate and thus create energy via the gearboxes 46, 48, 50 through corresponding alternator/generator systems 52, 54, 56, respectively. The arrows in Figure 4 signify the flow direction of the falling water. Should the water finally flowing through a tailrace 58 be collected in a sump 60, rather than being allowed to simply flow away, external pumps 62 may be provided to return the water back to the head penstock 14. The pumps 62 is used to pump the water back into the dam 15 in periods of low power demand via return water pipe 64.

Although not shown, an upper pumping setup may be located in the vicinity of the head penstock so as to provide a consistent flow of water through the head penstock 14 from the dam 15 to which the head penstock 14 is fitted, even if the rest water-level within the dam 15 goes below the level of the penstock 14.

Depending on the location, the system 10 may be supported by independent structural means, partially or fully enclosed in the ground, or attached to some existing structure or natural feature.

A key advantage of the present invention is that it can be retrofitted to existing dams without extensive alterations to the dam structure, therefore not compromising the structural integrity of the existing dam.

## Claims

1. An energy conversion system (10) comprising:
a primary waterwheel (12) for receiving water from a head penstock (14), the primary waterwheel (12) comprising a plurality of radial arms (18) rotatable about a primary axis (20), the radial arms (18) terminating in water scoops (22) for accommodating the water from the head penstock (14), the diameter of the primary waterwheel (12) defines an effective head height (h) between the head penstock (14) and a tailrace (58);
**characterized by** at least one additional overshot waterwheel (24, 26) located wholly within the defined head height (h) of the primary waterwheel (12), the additional waterwheel (24, 26) also comprising a plurality of radial arms (28, 30) rotatable about an axis (32.1, 34.1), the radial arms (28, 30) terminating in water scoops (36, 38); the additional overshot waterwheel (24, 26) is further charaterised by either:
discharging additional water from the head penstock (14) into the primary waterwheel (12), thereby extending the period over which the scoops (22) of the primary waterwheel (12) are filled with water, when the additional waterwheel (24) is located proximate the head penstock (14) and the primary waterwheel (12), or
accommodating water that has spilled out of the water scoops (22) of the primary waterwheel (12), when the additional waterwheel (26) is located proximate the primary waterwheel (12) and the tailrace (58).

2. The energy conversion system (10) of claim 1, **characterized in that** the primary waterwheel (12) and the at least one additional waterwheel (24, 26) are vertically orientated, with the at least one additional waterwheel (24, 26) being arranged sufficiently proximate the primary waterwheel (12) so that, for the additional waterwheel (24) located between the head penstock (14) and the primary waterwheel (12), water falls from the additional waterwheel (24) into at least one of the scoops (22) of the primary waterwheel (12), or for the additional waterwheel (26) located between the primary waterwheel (12) and the tailrace (58), water falls from the primary waterwheel (12) into at least one of the scoops (38) of the additional waterwheel.

3. The energy conversion system (10) of either claim 1 or claim 2, **characterized in that** the at least one additional waterwheel (24, 26) has a smaller diameter than the primary waterwheel (12) and is positioned wholly within the vertical head height (h) defined by the diameter of the primary waterwheel (12).

4. The energy conversion system (10) of any one of the preceding claims, **characterized in that** the at least one additional waterwheel (24, 26) comprises a secondary, operatively upper waterwheel (24) for receiving water from the head penstock (14) that is additional to the water transferred from the head penstock (14) directly onto the primary waterwheel (12).

5. The energy conversion system (10) of claim 4, **characterized in that** the secondary waterwheel (24) is arranged to convey water back onto the water scoops (22) of the primary waterwheel (12) as the secondary waterwheel (24) rotates, thus increasing the period over which the primary waterwheel (12) accommodates water during its rotation.

6. The energy conversion system (10) of either claim 4 or claim 5, **characterized in that** the secondary waterwheel (24) is positioned between 50 - 70° off the primary waterwheel's top dead centre.

7. The energy conversion system (10) of any one of claims 4 to 6, **characterized in that** the width of the water scoops (36) of the secondary waterwheel (24) is less than the width of the water scoops (22) of the primary waterwheel (12), thereby maximizing water capture within the primary waterwheel (12).

8. The energy conversion system (10) of any one of the preceding claims, **characterized in that** the at least one additional waterwheel (24, 26) comprises a tertiary, operatively lower waterwheel (26) for receiving water flowing out of the water scoops (22) of the primary waterwheel (12) as the primary waterwheel (12) rotates.

9. The energy conversion system (10) of claim 8, **characterized in that** the width of the water scoops (22) of the primary waterwheel (12) is less than the width of the water scoops (38) of the tertiary waterwheel (26), thereby ensuring that the water scoops (38) of the tertiary waterwheel (26) accommodate the same volume of water that is passing through the water scoops (22) of the primary waterwheel (12).

10. The energy conversion system (10) of either claim 8 or claim 9, **characterized in that** the tertiary waterwheel (26) is positioned between 90 - 135° off the primary waterwheel's top dead centre.

11. The energy conversion system (10) of any one of the preceding claims, **characterized in that** the radial arms (18, 28, 30) of the waterwheels (12, 24, 26) are tapered so that the scoop (22, 36, 38) situated at the very ends of the radial arms (18, 28, 30) is widened so as to carry the maximum amount of water as close to the end of the radial arms (18, 28, 30) as possible, thereby maximizing the leverage generated from the weight of water through the radial arms (18, 28, 30).

12. The energy conversion system (10) of any one of the preceding claims, **characterized in that** the water scoops (22, 36, 38) comprise a weighted outer rim (42) so as to create a flywheel effect as the waterwheels (12, 24, 26) rotate.

13. The energy conversion system (10) of claim 12, **characterized in that** breather holes (44) are placed where the scoops (22, 36, 38) are connected to the outer rim (42) of the waterwheel (12, 24, 26) so as to reduce the drag formed by air friction as the waterwheels (12, 24, 26) rotate.

14. The energy conversion system (10) of any one of the preceding claims, **characterized in that** each of the waterwheels (12, 24, 26) are attached via their central axes (20.1, 32.1, 34.1) each to a gear mechanism which is then in turn connected each to an alternator/generator system, each capable of converting the rotational power of each waterwheel (12, 24, 26) into electrical energy.

15. The energy conversion system (10) of any one of the preceding claims, **characterized in that** an upper pumping setup is located in the vicinity of the head penstock (14) so as to provide a consistent flow of water through the head penstock (14) from a dam (15) to which the head penstock (14) is fitted, also allowing water to be abstracted from the dam (15) even if the water- level in the dam (15) drops below the height of the head penstock (14).

## Patentansprüche

1. Ein Energieumwandlungssystem (10) mit
einem Primärwasserrad (12) zur Aufnahme von Wasser aus einer über Kopf verlaufenden Druckrohrleitung (14), wobei das Primärwasserrad (12) eine Mehrzahl von radial angeordneten Armen (18) umfasst, die um eine Primärachse (20) drehbar sind, wobei die radial angeordneten Arme (18) in Wasserschaufeln (22) zur Aufnahme des Wassers aus der über Kopf verlaufenden Druckrohrleitung (14) enden, wobei der Durchmesser des Primärwasserrades (12) eine wirksame Kopfhöhe (h) zwischen der über Kopf verlaufenden Druckrohrleitung (14) und einem Abflusskanal (58) begrenzt;
**gekennzeichnet durch** mindestens ein zusätzliches oberschlächtiges Wasserrad (24, 26), das vollständig innerhalb der begrenzten Kopfhöhe (h) des Primärwasserrades (12) angeordnet ist, wobei das zusätzliche Wasserrad (24, 26) ebenfalls eine Mehrzahl von radial angeordneten Armen (28, 30) umfasst, die um eine Achse (32.1, 34.1) drehbar sind, wobei die radial angeordneten Arme (28, 30) in Wasserschaufeln (36, 38) enden; das zusätzliche oberschlächtige Wasserrad (24, 26) ist ferner **gekennzeichnet durch** entweder
die Abgabe zusätzlichen Wassers aus der über Kopf verlaufenden Druckrohrleitung (14) in das Primärwasserrad (12), wodurch es den Zeitraum verlängert, in dem die Schaufeln (22) des Primärwasserrades (12) mit Wasser gefüllt sind, wenn das zusätzliche Wasserrad (24) nah an der über Kopf verlaufenden Druckrohrleitung (14) und dem Primärwasserrad (12) angeordnet ist, oder
die Aufnahme von Wasser, das aus den Wasserschaufeln (22) des Primärwasserrades (12) fließt, wenn das zusätzliche Wasserrad (26) nah an dem Primärwasserrad (12) und dem Abflusskanal (58) angeordnet ist.

2. Energieumwandlungssystem (10) nach Anspruch 1, **dadurch gekennzeichnet, dass** das Primärwasserrad (12) und das mindestens eine zusätzliche Wasserrad (24, 26) vertikal ausgerichtet sind, wobei das mindestens eine zusätzliche Wasserrad (24, 26) ausreichend nah an dem Primärwasserrad (12) angeordnet ist, so dass bei dem zwischen der über Kopf verlaufenden Druckrohrleitung (14) und dem Primärwasserrad (12) angeordneten zusätzlichen Wasserrad (24) Wasser aus dem zusätzlichen Wasserrad (24) in mindestens eine der Schaufeln (22) des Primärwasserrades (12) fällt, oder bei dem zwischen dem Primärwasserrad (12) und dem Abflusskanal (58) angeordneten zusätzlichen Wasserrad (26) Wasser aus dem Primärwasserrad (12) in mindestens eine der Schaufeln (38) des zusätzlichen Wasserrades fällt.

3. Energieumwandlungssystem (10) nach Anspruch 1 oder 2, **dadurch gekennzeichnet, dass** das mindestens eine zusätzliche Wasserrad (24, 26) einen kleineren Durchmesser als das Primärwasserrad (12) hat und vollständig innerhalb der von dem Durchmesser des Primärwasserrades (12) begrenzten vertikalen Kopfhöhe (h) angeordnet ist.

4. Energieumwandlungssystem (10) nach einem der vorhergehenden Ansprüche, **dadurch gekennzeichnet, dass** das mindestens eine zusätzliche Wasserrad (24, 26) ein sekundäres, operatives oberes Wasserrad (24) zur Aufnahme von Wasser aus der über Kopf verlaufenden Druckrohrleitung (14) umfasst, das zusätzlich zu dem aus der über Kopf verlaufenden Druckrohrleitung (14) direkt auf das Primärwasserrad (12) geleiteten Wasser ist.

5. Energieumwandlungssystem (10) nach Anspruch 4, **dadurch gekennzeichnet, dass** das Sekundärwasserrad (24) so angeordnet ist, um Wasser zurück auf die Wasserschaufeln (22) des Primärwasserrades (12) zu befördern, wenn sich das Sekundärwasserrad (24) dreht, und somit den Zeitraum zu verlängern, in dem das Primärwasserrad (12) während seiner Drehung Wasser aufnimmt.

6. Energieumwandlungssystem (10) nach Anspruch 4 oder 5, **dadurch gekennzeichnet, dass** das Sekundärwasserrad (24) zwischen 50 bis 70 ° vom oberen Totpunkt des Primärwasserrades angeordnet ist.

7. Energieumwandlungssystem (10) nach einem der Ansprüche 4 bis 6, **dadurch gekennzeichnet, dass** die Breite der Wasserschaufeln (36) des Sekundärwasserrades (24) kleiner ist als die Breite der Wasserschaufeln (22) des Primärwasserrades (12), wodurch die Wasseraufnahme in dem Primärwasserrad (12) auf ein Höchstmaß erhöht wird.

8. Energieumwandlungssystem (10) nach einem der vorhergehenden Ansprüche, **dadurch gekennzeichnet, dass** das mindestens eine zusätzliche Wasserrad (24, 26) ein tertiäres, operatives unteres Wasserrad (26) zur Aufnahme von Wasser umfasst, das aus den Wasserschaufeln (22) des Primärwasserrades (12) fließt, wenn sich das Primärwasserrad (12) dreht.

9. Energieumwandlungssystem (10) nach Anspruch 8, **dadurch gekennzeichnet, dass** die Breite der Wasserschaufeln (22) des Primärwasserrades (12) kleiner ist als die Breite der Wasserschaufeln (38) des Tertiärwasserrades (26), wodurch sichergestellt ist, dass die Wasserschaufeln (38) des Tertiärwasserrades (26) die gleiche Wassermenge aufnehmen, die durch die Wasserschaufeln (22) des Primärwasserrades (12) fließt.

10. Energieumwandlungssystem (10) nach Anspruch 8 oder 9, **dadurch gekennzeichnet, dass** das Tertiärwasserrad (26) zwischen 90 bis 135 ° vom oberen Totpunkt des Primärwasserrades angeordnet ist.

11. Energieumwandlungssystem (10) nach einem der vorhergehenden Ansprüche, **dadurch gekennzeichnet, dass** sich die radial angeordneten Arme (18, 28, 30) der Wasserräder (12, 24, 26) verjüngen, so dass die Schaufel (22, 36, 38), die jeweils am äußersten Ende der radial angeordneten Arme (18, 28, 30) angeordnet ist, verbreitert ist, so dass sie nah am Ende der radial angeordneten Arme (18, 28, 30) die größtmögliche Wassermenge fassen kann, wodurch die Hebelwirkung, die durch das Wassergewicht über die radial angeordneten Armen (18, 28, 30) erzeugt wird, auf ein Höchstmaß erhöht wird.

12. Energieumwandlungssystem (10) nach einem der vorhergehenden Ansprüche, **dadurch gekennzeichnet, dass** die Wasserschaufeln (22, 36, 38) einen massebelegten äußeren Rand (42) umfassen, so dass eine Schwungradwirkung erzeugt wird, wenn sich die Wasserräder (12, 24, 26) drehen.

13. Energieumwandlungssystem (10) nach Anspruch 12, **dadurch gekennzeichnet, dass** dort, wo die Schaufeln (22, 36, 38) an den äußeren Rand (42) des Wasserrades (12, 24, 26) befestigt sind, Belüftungslöcher (44) angebracht sind, so dass der durch die Luftreibung erzeugte Widerstand verringert wird, wenn sich die Wasserräder (12, 24, 26) drehen.

14. Energieumwandlungssystem (10) nach einem der vorhergehenden Ansprüche, **dadurch gekennzeichnet, dass** jedes der Wasserräder (12, 24, 26) an seiner Mittelachse (20.1, 32.1, 34.1) mit je einem Getriebemechanismus verbunden ist, der wiederum mit einem Wechsel-/Gleichstromgeneratorsystem verbunden ist, von dem die Rotationsenergie jedes Wasserrades (12, 24, 26) in elektrische Energie umwandelbar ist.

15. Energieumwandlungssystem (10) nach einem der vorhergehenden Ansprüche, **dadurch gekennzeichnet, dass** in der Nähe der über Kopf verlaufenden Druckrohrleitung (14) ein oberer Pumpenaufbau angeordnet ist, so dass für einen ständigen Wasserfluss durch die über Kopf verlaufende Druckrohrleitung (14) aus einer Wassersperre (15), mit der die über Kopf verlaufende Druckrohrleitung (14) verbunden ist, gesorgt ist und es zudem ermöglicht wird, Wasser von der Wassersperre (15) zu entnehmen, auch wenn der Wasserstand in der Wassersperre (15) unter die Höhe der über Kopf verlaufenden Druckrohrleitung (14) fällt.

## Revendications

1. Système de conversion d'énergie (10) comprenant :
une roue hydraulique principale (12) destinée à recevoir de l'eau provenant d'une conduite forcée aérienne (14), la roue hydraulique principale (12) comprenant une pluralité de bras radiaux (18) pouvant tourner autour d'un axe principal (20), les bras radiaux (18) s'achevant dans les augets à eau (22) permettant de recevoir l'eau à partir de la conduite forcée aérienne (14), le diamètre de la roue hydraulique principale (12) définissant une hauteur de chute respective (h) entre la conduite forcée aérienne (14) et un conduite de décharge (58) ;
**caractérisée par** au moins une roue hydraulique supplémentaire mue d'en-dessus (24, 26) placée entièrement à l'intérieur de la hauteur de chute définie (h) de la roue hydraulique principale (12), la roue hydraulique supplémentaire (24, 26) comportant également une pluralité de bras radiaux (28, 30) pouvant tourner autour d'un axe (32.1, 34.1) , les bras radiaux (28, 30) s'achevant dans les augets à eau (36, 38) ; la roue hydraulique supplémentaire mue d'en-dessus (24, 26) est **caractérisée, de plus, par** le fait de :
soit décharger de l'eau supplémentaire à partir de la conduite forcée aérienne (14) dans la roue hydraulique principale (12), augmentant de ce fait le temps pendant lequel les godets (22) de la roue hydraulique principale (12) se remplissent d'eau, lorsque la roue hydraulique supplémentaire (24) est placée à proximité de la conduite forcée aérienne (14) et de la roue hydraulique principale (12),
soit recevoir de l'eau qui a été projetée hors des augets à eau (22) de la roue hydraulique principale (12) lorsque la roue hydraulique supplémentaire (26) est placée à proximité de la roue hydraulique principale (12) et de la conduite de décharge (58).

2. Système de conversion d'énergie (10) selon la revendication 1, **caractérisé en ce que** la roue hydraulique principale (12) et la, au moins une, roue hydraulique supplémentaire (24, 26) sont orientées verticalement, la, au moins une, roue hydraulique supplémentaire (24, 26) étant disposée suffisamment près de la roue hydraulique principale (12), de sorte que, pour la roue hydraulique supplémentaire (24) placée entre la conduite forcée aérienne (14) et la roue hydraulique principale (12), l'eau chute à partir de la roue hydraulique supplémentaire (24) dans au moins l'un des godets (22) de la roue hydraulique principale (12), ou pour la roue hydraulique supplémentaire (26) placée entre la roue hydraulique principale (12) et la conduite de décharge (58) l'eau chute à partir de la roue hydraulique principale (12) dans au moins l'un des godets (38) de la roue hydraulique supplémentaire.

3. Système de conversion d'énergie (10) selon l'une ou l'autre des revendications 1 et 2, **caractérisé en ce que** la, au moins une, roue hydraulique supplémentaire (24, 26) présente un diamètre plus petit que le diamètre de la roue hydraulique principale (12) et **en ce qu'**elle est positionnée entièrement à l'intérieur de la hauteur de chute verticale (h) définie par le diamètre de la roue hydraulique principale (12).

4. Système de conversion d'énergie (10) selon l'une quelconque des revendications précédentes, **caractérisé en ce que**, la (les) roue(s) hydraulique(s) supplémentaire(s) (24, 26) comprend (comprennent) une seconde roue hydraulique, à fonctionnement par-dessus (24) pour recevoir l'eau à partir de la conduite forcée aérienne (14) qui représente un supplément à l'eau transférée à partir de la conduite forcée aérienne (14) directement sur la roue hydraulique principale (12).

5. Système de conversion d'énergie (10) selon la revendication 4, **caractérisé en ce que** la seconde roue hydraulique (24) est conçue pour acheminer l'eau en retour sur les augets à eau (22) de la roue hydraulique principale (12) lorsque la seconde roue hydraulique (24) tourne, augmentant ainsi la période durant laquelle la roue hydraulique principale (12) reçoit de l'eau pendant sa rotation.

6. Système de conversion d'énergie (10) selon soit la revendication 4 soit la revendication 5, **caractérisé en ce que** la seconde roue hydraulique (24) est positionnée avec un décalage de 50 à 70° du point de centrage supérieur de la roue hydraulique principale.

7. Système de conversion d'énergie (10) selon l'une quelconque des revendications 4 à 6, **caractérisé en ce que** la largeur des augets à eau (36) de la seconde roue hydraulique (24) est inférieure à la largeur des augets à eau (22) de la roue hydraulique principale (12) rendant de ce fait maximal la capture d'eau à l'intérieur de la roue hydraulique principale (12).

8. Système de conversion d'énergie (10) selon l'une quelconque des revendications précédentes, **caractérisé en ce que** la (les) roue(s) hydrauliques supplémentaire(s) (24, 26) comprend comprennent une troisième roue hydraulique à fonctionnement par-dessous (26) pour recevoir l'eau s'écoulant hors des augets à eau (22) de la roue hydraulique principale (12) lorsque la roue hydraulique principale (12) tourne.

9. Système de conversion d'énergie (10) selon la revendication 8, **caractérisé en ce que** la largeur des augets à eau (22) de la roue hydraulique principale (12) est inférieure à la largeur des augets à eau (38) de la troisième roue hydraulique (26), assurant de ce fait que les augets à eau (38) de la troisième roue hydraulique (26) reçoivent le même volume d'eau que celui qui passe à travers les augets à eau (22) de la roue hydraulique principale (12).

10. Système de conversion d'énergie (10) selon l'une ou l'autre des revendications 8 ou 9, **caractérisé en ce que** la troisième roue hydraulique (26) est positionnée entre 90 et 135° de décalage par rapport au point de centrage supérieur de la roue hydraulique principale.

11. Système de conversion d'énergie (10) selon l'une quelconque des revendications précédentes, **caractérisé en ce que** les bras radiaux (18, 28, 30) des roues hydrauliques (12, 24, 26) sont coniques de sorte que l'auget (22, 36, 38) placé au niveau des extrémités des bras radiaux (18, 28, 30) est élargi de façon à porter la quantité d'eau maximale aussi près que possible de l'extrémité des bras radiaux (18, 28, 30), rendant, de ce fait, maximal l'effet de levier généré à partir du poids de l'eau à travers les bras radiaux (18, 28, 30).

12. Système de conversion d'énergie (10) selon l'une quelconque des revendications précédentes, caractérisé en les augets à eau (22, 36, 38) comportent un rebord extérieure lesté (42) de façon à créer un effet d'inertie lorsque les roues hydrauliques (12, 24, 26) tournent.

13. Système de conversion d'énergie (10) selon la revendication 12, **caractérisé en ce que** des trous de prise d'air (44) sont placés à l'endroit où les augets (22, 36, 38) sont raccordés au rebord extérieur (42) de la roue hydraulique (12, 24, 26) de façon à réduire la résistance au courant formée par la friction de l'air lorsque les roues hydrauliques (12, 24, 26) tournent.

14. Système de conversion d'énergie (10) selon l'une quelconque des revendications précédentes, **caractérisé en ce que** chacune des roues hydrauliques (12, 24, 26) sont fixées par l'intermédiaire de leurs axes centraux (20.1, 32.1, 34.1) chacune, à un mécanisme d'engrenages qui les connectent alors, à leur tour, chacun à système d'alternateur/générateur, chacun étant capable de convertir l'énergie de rotation de chaque roue hydraulique (12, 24, 26)) en énergie électrique.

15. Système de conversion d'énergie (10) selon l'une quelconque des revendications précédentes, **caractérisé en ce que** la disposition d'de pompage supérieur est placée au voisinage de la conduite forcée aérienne (14) de façon à fournir un écoulement important d'eau par la conduite forcée aérienne (14) à partir d'un barrage (15) auquel la conduite forcée aérienne (14) est ajustée, permettant également à l'eau d'être extraite du barrage (15) même si le niveau d'eau dans le barrage (15) tombe au-dessous de la hauteur de la conduite forcée aérienne.
